Europäisches Patentamt

(19) European Patent Office

Office européen des brevets

(11) Publication number: **0 321 198**
**A1**

## EUROPEAN PATENT APPLICATION

(21) Application number: 88311809.3

(22) Date of filing: 14.12.88

(51) Int. Cl.⁴: **E21B 43/117 , E21B 43/119 , E21B 47/10 , G01V 5/08**

The title of the invention has been amended (Guidelines for Examination in the EPO, A-III, 7.3).

(30) Priority: 14.12.87 US 132443

(43) Date of publication of application:
21.06.89 Bulletin 89/25

(84) Designated Contracting States:
DE FR GB NL

(71) Applicant: **HALLIBURTON COMPANY**
**P.O. Drawer 1431**
**Duncan Oklahoma 73536(US)**

(72) Inventor: **Smith, Harry Davis, Jr.**
**14738 Bramblewood**
**Houston Texas 77079(US)**

(74) Representative: **Wain, Christopher Paul et al**
**A.A. THORNTON & CO. Northumberland**
**House 303-306 High Holborn**
**London WC1V 7LE(GB)**

(54) **Radioactive shaped charges and method for well perforating.**

(57) Methods and apparatus utilizing a shaped explosive charge assembly in a process for perforating earth formations from a well bore whereby the maximum depth of the mean depth of a perforation penetration may be determined. The charge assembly, shaped to produce a perforating jet on detonation, is provided with a gamma ray emitting substance which is deposited at a specific locus in the path of the perforation. By measuring degradation of the gamma radiation detected by a detector 38 in the well bore as by obtaining a ratio of radiation count rates in a first energy range sensitive to primary radiation with minimal Compton scattering and a second energy range sensitive to radiation degraded through Compton scattering, an indication of the depth of perforation is obtained. In one form of the charge assembly 10 the radioactive substance 20 is affixed in a manner, such as at the apex of a conical liner 17 recessed inwardly of the front of the charge 12, whereby upon charge detonation, the radioactive material is deposited by the perforating jet at the maximum depth of perforation and the measurement of spectral degradation provides an indication of maximum depth of perforation. In a second form of charge assembly 60, the radioactive material 65 is affixed in a manner, such as to uniformly cover the surface of the liner 64 disposed against the explosive charge 61, whereby upon detonation and perforation of the formation, the radioactive material is uniformly distributed along the perforation path and the measurement of spectral degradation provides an indication of mean depth of perforation.

EP 0 321 198 A1

FIG.1

FIG.6 SPECTRAL SHAPES FROM $^{46}Sc$ AS A FUNCTION OF TRACER PENETRATION (TRACER UNIFORMLY DISTRIBUTED ALONG PERFORATION PATH)

## RADIOACTIVE SHAPED CHARGES FOR WELL PERFORATING

This invention relates generally to well perforating and more particularly to radiactive shaped charges useful therefor.

In completing a well, it is usually necessary to perforate the earth formations penetrated by a well bore as a means for inducing the passage of formation fluids into the well bore. In cased wells, it is also necessary to perforate the steel casing which lines the well bore and the cement annulus in which the casing is set. To further stimulate and induce the flow of fluids from the formations, hydraulic fracturing or acidizing techniques may be utilized in conjunction with perforating.

Information as to the effectiveness of the perforating process is an important aid for determining whether further flow stimulation will be necessary and for predicting the likelihood of success of hydraulic fracturing stimulation. Such information can also be useful in the diagnosis of post-stimulation problems.

It is conventional in well perforating processes to employ shaped charges or jet charges for providing an explosive force for accomplishing perforation. The shaped explosive charge is in the form of a block or cylinder of explosive material which is indented in its front face to form a recess. The recess is usually, but not always, conical in shape. The recess is provided with a metallic liner, usually of copper, and the explosive material is encased within a container constructed of lead, for example. When the charge is detonated by an explosive initiator, the container confines the explosive pressures for a brief time during which the liner is collapsed inwardly towards its conical axis. Collapse of the liner occurs first at its apex. Simultaneously, the collapsed liner is heated to incandescence by the action of the explosive charge. The jet of incandescent metal is propelled outwardly to form the leading end of a perforating jet directed along the axis of the conical recess. The remainder of the liner similarly collapses and forms a subsequent part of the perforating jet. Because of the high velocity and energy content of the perforating jet, it is able to penetrate the well casing, the cement sheath surrounding the casing, and the earth formations beyond. Heretofore, however, there has been no reliable way to ascertain how deeply the formations have been penetrated and thereby determine the effectiveness of the perforating process.

We have now devised a shaped charge assembly for use in a perforating process, and a method of determining either the maximum depth of penetration or the mean depth of perforation penetration. For determining maximum perforation depth, the shaped charge is provided with a radioactive tracer isotope located in a manner, such as at the apex of the conical liner whereby upon detonation, the radioactive material will form the leading end of the perforating jet and will be deposited in the earth formation at the maximum penetration depth of the perforation. If a determination of mean depth of the perforation is preferred, the shaped charge is provided with a liner for its conical recess, having a radioactive isotope affixed thereto in a manner, such as to form the surface of the liner disposed against the explosive charge material whereby upon perforation of the formation, the radioactive tracer will be uniformly distributed along the perforation path.

Gamma ray spectroscopy tools are now in use in well logging operations which are adapted to measure the energy spectra or distribution of gamma rays emitted by radioactive material in the earth formations as they are detected by a detector in the well bore. This invention uses such a tool for detecting the gamma radiation from the tracer deposited in the earth formation by the perforating jet and for measuring the amount of spectral degradation to which the radioactive tracer material gamma radiation is subjected in traversing the earth material in reaching the detector.

As described in our copending European patent application filed on even date herewith (Reference 15258) it is possible to determine the mean radial extent of radioactive tracer penetration into an earth formation fracture by obtaining measurements of a ratio of high energy gamma ray count rate from primary gamma radiation which reaches the detector without Compton scattering collisions as compared to a low energy count rate from radiation which has been degraded through Compton scattering collisions. This ratio, known as the Compton ratio, and defined herein to be a high energy count rate (from approximately 350 Kev to 3000 Kev) divided by a low energy count rate (from approximately 150 Kev to 350 Kev), provides a direct indication of the mean radial distance between the radioactive tracer and detector. The actual energy ranges selected will be a function of the gamma energies of the specific tracer to be used. Accordingly, this invention makes use of a perforating charge assembly wherein radioactive tracer material placed thereon will be deposited at a specified locus in the formation and whereby measurements of the degradation of the tracer gamma ray energy spectrum can be made in a method for evaluating perforation performance.

This invention uses a perforating shaped charge device which is modified by the positioning on the device of a radioactive tracer material, of the type which emits gamma rays. Upon detonation of the perforating charge, the radioactive tracer will be deposited in the perforation produced. In one form of the explosive charge assembly the radioactive tracer is affixed to the charge device in a manner, such as at the apex of a conical liner recessed inwardly of the front of the charge, whereby upon detonation of the charge and perforation of the formation, the radioactive material is deposited at the maximum depth of the perforation. Should an alternate shaped charge design be utilized such that some other area on the charge is deposited at the maximum depth of the perforation, then the tracer would be affixed to that portion of the charge assembly. By measuring the degradation of the energy spectrum of the gamma radiation as detected by a detector in the well bore by a means, such as a Compton ratio, an indication may be obtained of the maximum depth of the perforation. In a second form of the explosive shaped charge assembly, the radioactive tracer material is affixed thereto in a manner such as to uniformly cover the surface of the conical liner disposed against the explosive charge, whereby upon detonation of the charge and perforation of the formation, the radioactive tracer material is uniformly distributed along the perforation path. In this instance, a Compton ratio or other function representing the degradation of the radioactive tracer gamma ray energy spectrum may be obtained as an indicator of the mean depth of the perforation penetration.

In order that the invention may be more fully understood, reference is made to the accompanying drawings, wherein:

Fig. 1 is a cross-sectional view of one embodiment of shaped charge of the invention, provided with a radioactive tracer material located at the apex of the conical liner of the recess in the front face of the shaped explosive charge and used for determining maximum depth of a perforation penetration;

Fig. 2 is a cross-sectional view of an alternative embodiment of shaped charge of the invention, provided with a radioactive tracer material which uniformly covers the conical surface of the liner of the recess in the front face of the shaped explosive charge and used according to the techniques of the invention for determining the mean depth of perforation penetration;

Fig. 3 is a schematic illustration of the explosive forces resulting from detonation of a shaped charge explosive which forms a high speed perforating jet;

Fig. 3b is a cross-section view of a shaped charge explosive which on detonation forms the pattern of explosive forces of Fig. 3a;

Fig. 4 is a schematic diagram of a well logging system which may be used in measuring gamma ray spectral degradation of radioactive tracer isotopes deposited in an earth formation perforation by a perforating process which uses radioactive shaped charges such as depicted in Figs. 1 or 2.

Fig. 5 is a graphical representation of gamma ray energy spectra of Iridium-192 obtained in a well bore for both deep and shallow perforations;

Fig. 6 is a graphical representation of gamma ray energy spectra of Scandium-46 obtained in a well bore for different penetration depths of perforations; and

Fig. 7 is a graphical plot showing a representative functional relationship between the count ratio (R) utilized in the invention and different depths of perforation.

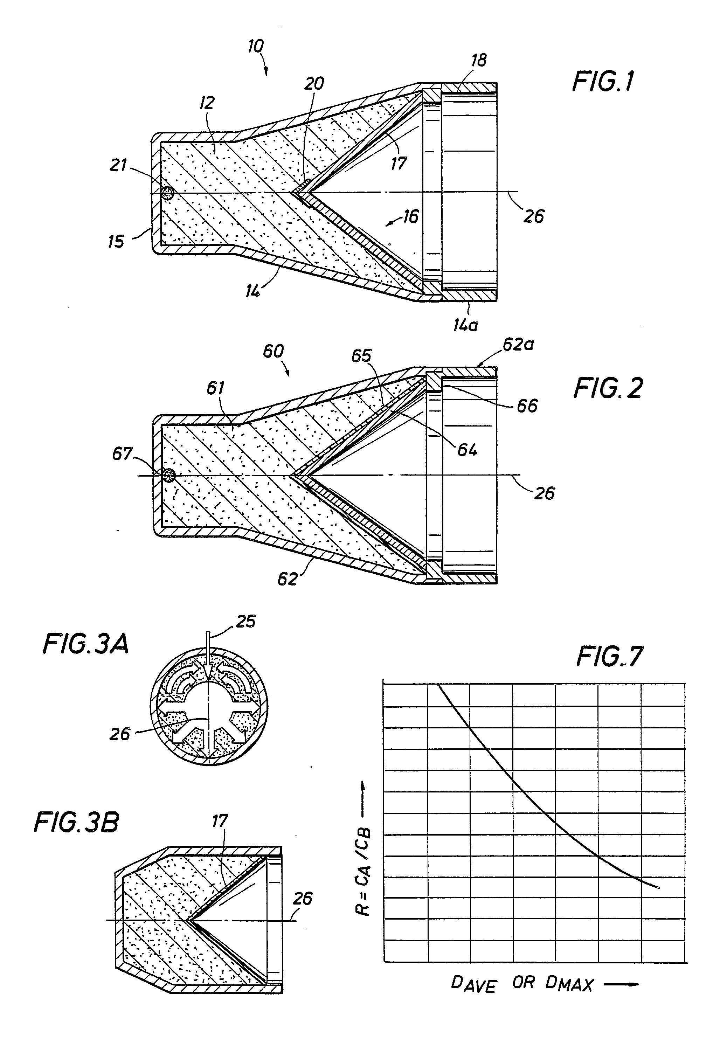

Referring to the drawings in greater detail, there is shown in cross-sectional view in Fig. 1, a shaped charge assembly 10 suitable for use in a well perforating process. The charge assembly 10 comprises a charge of high explosive material 12 which substantially fills a charge container 14 having end portions of circular cross-section and a conically formed intermediate section. The container 14, which is closed at one end 15, may be constructed of any material of sufficient strength to act as a retainer of the explosive material and may be fabricated of a heavy or dense material, such as lead or steel. Although a container of generally cylindrical shape and generally circular cross-section is satisfactory, a conical shape in the portion thereof which encases the explosive charge 12 is preferred for increasing the penetration power of the device for a given amount of explosive.

The explosive charge 12 is formed with a hollowed-out forward end in the form of a conical recess 16 opening towards the front face of the assembly. A conical shaped metallic liner 17 is fitted into the recess 16 and retained in the container by an annular flange or shoulder 18 provided in the cylindrical section 14a of container 14 whereby its outer conical surface is in conforming engagement with the explosive charge 12 throughout its surface area. The liner 17 is preferably made of a relatively dense and relatively ductile material, such as copper.

As thus described, shaped charge assembly 10 is not unlike conventional shaped charge assemblies used in a well perforating process. For this invention, however, the shaped charge assembly may be provided with a conically shaped cap or radioactive tracer isotope 20 affixed by solder, or mixed in paint and painted on, or applied by other suitable means, to liner 17 at the apex thereof, either on the inside or on the exposed surface of the charge carrier. If the tracer is affixed to the exposed surface, it may be

3

applied just prior to utilization of the gun. It also could be applied at the well site, reducing the radiation hazard during storage and shipping, and also during the transport of the gun to the well site.

It is to be understood that the shaped charge 12 may be detonated in a conventional manner, such as by a blasting cord 21 passing either interiorly as shown, or exteriorly through the closed end of the container 14. The blasting cord or primer cord 21 is adapted to be detonated by an electric blasting cap (not shown) which can be activated from the surface. When used in a well perforating process, the charge assembly 10 can be suitably supported in a housing or carrier (not shown) which is adapted to be lowered into the well at a specified depth corresponding to the location of the formation to be perforated. A charge carrier such as disclosed in U.S. Pat. no. 3,048,101 could be used for this purpose.

The principle of the shaped charge is well known and is illustrated by the pattern of explosive forces immediately following detonation as shown in Fig. 3. The explosive pressures are initially confined for a time sufficient for the pressures to cause a uniform collapse of the liner 17 (Fig. 1) toward its axis 26 (Fig. 1) and the formation of a perforating jet 25 (Fig. 3) traveling along the axis. Collapse of the liner 17 (Fig. 1) commences at its apex end which is projected forward and forms the leading end of the jet. The jet 25 (Fig. 3) is continuously formed by the progressive uniform collapsing of the liner 17 (Fig. 1) until the open end 21 (Fig. 1) of the liner 17 (Fig. 1) is finally collapsed on the axis 26 (Fig. 1) and forms the tail end of the jet 25 (Fig. 3). Since the apex of the conical liner 17 (Fig. 1) is formed of radioactive tracer material 20 (Fig. 1), the leading end of the perforating jet 25 (Fig. 3) is formed of radioactive tracer material and will generally be deposited in the perforated earth formation at the maximum end of the perforation. However, if some other area of the shaped charge assembly, such as a circular annulus immediately forward of the apex, is projected to the maximum depth into the perforation, then the tracer would be applied at that area of the carrier or charge.

It is then possible by use of gamma ray spectroscopy well logging tools now in current use to measure the energy spectra of the gamma rays emitted by the radioactive tracer deposited in the earth formation by the perforating jet. It is also possible to determine the mean depth of penetration of the radioactive tracer into a fractured formation by measurement of degradation of the tracer isotope gamma ray energy spectrum in the method referred to above. That method, described in our said copending European application, involves obtaining a count rate ratio

$$R = \frac{C_A}{C_B}$$

of the count rates in two different selected energy regions of the tracer spectrum as detected by a radiation detecting tool suspended in the well bore at a depth corresponding to that of the tracer. The energy region of the gamma ray spectrum selected for obtaining the count rate $C_A$ is sensitive to primary radiation from the tracer reaching the detector which has undergone little or no Compton scattering. The other energy region of the gamma ray spectrum for obtaining the count rate $C_B$ is a lower energy part of the spectrum in which the gamma radiation contains a strong Compton scattered component, and yet is high enough in energy to eliminate photoelectric absorption effects caused by the casing or other downhole materials. This ratio may be interpreted as an indicator of the mean radial distance D between the radioactive tracer gamma ray source and the gamma ray detector. With proper test formation calibration experiments, the actual functional relationship between R and D can be established. Such a functional relationship is shown in Fig. 7. Accordingly, the methods of this invention involve the step of perforating an earth formation from a well bore at a desired location by means of a shaped charge having a radioactive tracer located thereon so that it will be deposited in the earth formation at either the maximum depth of the perforation or alternatively deposited in a uniform distribution of tracer material along the perforation.

While employment of an explosive charge assembly such as shown in Fig. 1 makes possible the measurement of maximum depth of the perforation, it is also possible to measure the mean depth of perforation penetration by employment of an alternate form of the perforating charge assembly such as shown in Fig. 2. In this alternate form of explosive assembly there is shown in cross-sectional view, a shaped charge assembly 60 which is similar to the charge assembly of Fig. 1 and to most shaped charges as are conventionally used in a well perforating process. The shaped charge assembly 60 of Fig. 2, however, differs from that shown in Fig. 1 principally in the provision of radioactive tracer which is located on the assembly such that upon perforation of the formation by detonation of the charge, the radioactive tracer will be uniformly distributed along the perforation path.

In the shaped charge assembly 60, the explosive charge 61 receives a close fitting conically shaped liner which is comprised of a first conically shaped element 64 of relatively dense and relatively ductile material, such as copper, and a second conically shaped element 65 of radioactive tracer material which is interposed between the explosive charge and the first liner element 64. The radioactive tracer may be shaped for cooperative engagement on the liner 64, or it could be plated or painted thereon if desired. Suitable radioactive tracers (half lives in parenthesis) for this purpose which could be used include $^{46}$Sc-($t^{\frac{1}{2}}$=84d), $^{192}$Ir($t^{\frac{1}{2}}$=74d) or $^{198}$Au($_{t\frac{1}{2}}$=27d), as will be discussed in more detail subsequently. An annular flange or retainer ring 66 affixed to the inner wall of the charge container 62 in the cylindrical section 62a thereof retains the liner elements and the explosive material in fixed position in the container 62.

Upon detonation of the perforating charge 61, as by a blasting cord 67 at the base of the container, the apex of the conical liner forms the leading edge of the perforating jet and the progressive uniform collapse of the liner elements 64, 65 results in the uniform distribution of radioactive material throughout the cylindrically shaped perforating jet, such as the perforating jet 25 shown in Fig. 3. Accordingly, the perforating jet leaves a substantially uniformly distributed deposit of the radioactive tracer material throughout the length of the perforation path.

The methods then involve the further steps of detecting the intensity of gamma rays from the tracer by means of a radiation detecting tool suspended in the well bore at the location of the perforation P and measuring the tracer gamma ray energy spectrum, which is used to indicate the degree of the gamma ray spectral energy degradation of the tracer gamma rays. The preferred indication of degradation is obtained from a ratio of the count rates of gamma radiation in a first, higher energy region of the tracer gamma ray energy spectrum to the count rate in a second, lower energy part of the gamma ray energy spectrum. This ratio (R) may be interpreted as a function of the mean radial distance (Dave) of the radioactive tracer gamma ray source from the detector, R decreasing as the mean depth increases. Accordingly, if the tracer is positioned on the charge such that all is deposited at the maximum depth (Dmax) of the perforation, the measured gamma ray count rate ratio of spectral degradation will indicate this maximum depth of the perforation. A lower ratio, R, would indicate a greater perforation depth. The ratio could be suitably calibrated using test formation experiments into Borea sand or concrete to determine the specific formation relating R to Dmax or R to Dave. If the tracer is designed to be uniformly distributed along the perforation path, the measured gamma ray count rate ratio of the spectral degradation will be indicative of the mean depth of perforation penetration, Dave.

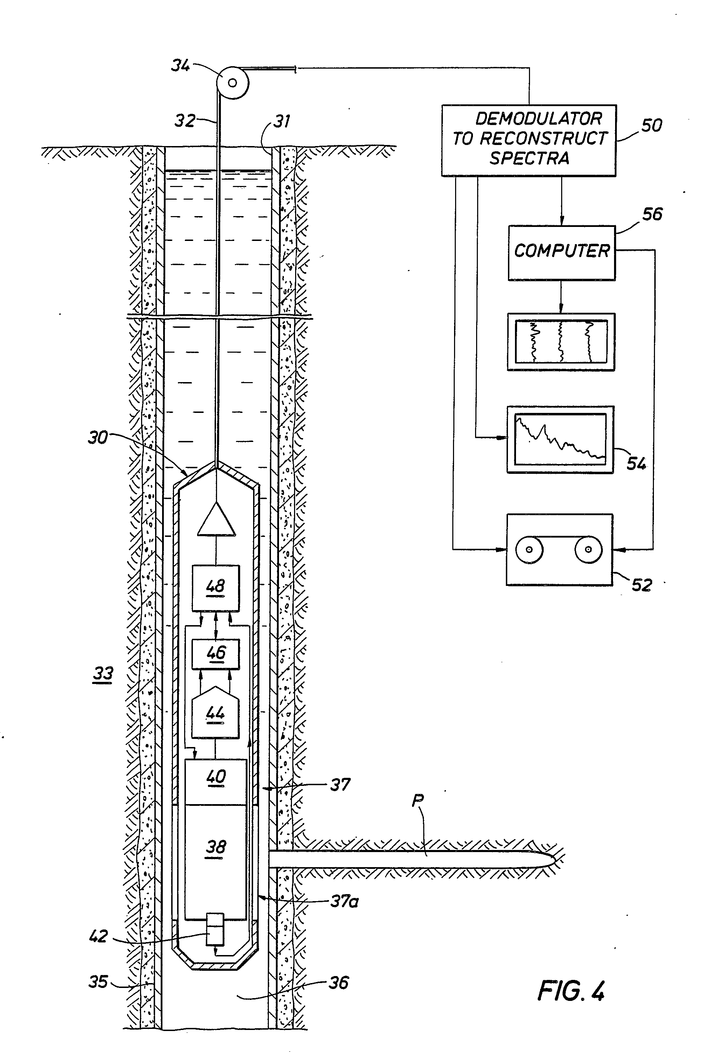

A gamma ray logging system which may be used for practicing the invention is illustrated schematically in Fig. 4. The system shown in Fig. 4 comprises a fluid tight well logging tool 30 which is suspended and moved through a well borehole 31 on a logging cable 32 supported by a surface located reel 34 on a logging truck or the like. The borehole 31 which traverses earth formations 33 is lined with a tubular steel casing 35 set in place by an annulus of cement. The casing contains a well bore fluid 36. In conventional manner, rotation of the reel 34 raises or lowers the cable which is measured to provide an indication of borehole depth as the cable 32 is moved into or out of the borehole. The tool 30 is provided with a steel housing 37 having a cylindrical section 37a constructed from a material having a low atomic number (Z) and a low density to facilitate observation and measurement of photoelectric absorption of low energy gamma rays. Incident gamma rays whether from natural radiation or from tracers are detected in a large NaI (Ti) or other suitable scintillation crystal 38, the scintillations of which are optically coupled to a low noise photomultiplier 40 for producing electrical pulses of magnitudes proportional to the energies of the impinging gamma rays.

The system gain is maintained to within ± 0.5% by a coincidence stabilization technique for which purpose the apparatus includes in close proximity to the large detector 38, a much smaller crystal 42 containing an embedded $^{241}$Am source. When $^{241}$Am decays, a $^{60}$Kev gamma ray and a high energy alpha particle are emitted essentially simultaneously. The alpha particles are detected with virtually 100% efficiency in the smaller detector, whereas most of the $^{60}$Kev gamma rays escape. Approximately 20% of these gamma rays are detected in the large NaI (sodium iodide) detector. Since these gamma rays from the stabilizer are in coincidence with the alpha particles, they can be isolated from all other gamma rays detected in the large crystal 38 with better than 99% efficiency whereby the gamma ray coincidence spectrum will contain only $^{60}$Kev stabilizer gamma rays and is therefore unaffected by changes in the distribution of external gamma rays. In addition, the anti-coincidence spectrum in the NAI crystal 38 contains gamma radiation originating exclusively from the formations, removing the need for stripping out stabilizer counts. Of course other gain stabilization techniques, as are commonly used in the art, could alternatively be used if desired.

After amplification by photomultiplier 40, both the coincidence and anti-coincidence data pulses are digitized in the tool by an analog-to-digital converter 44, accumulated in a data accumulator 46, and sorted by a microprocessor controller 48 which synchronizes transmission of data at regular data intervals from the tool 30 to equipment at the surface to be later described. The coincidence (stabilizer) events are converted into a 256 channel spectrum which spans the energy range from 0-350 Kev so as to enable the automatic downhole gain stabilizer feedback circuit to maintain system gain to approximately ± 0.5%. The anti-coincidence (formation gamma radiation) events are converted into two spectra, one of which spans the low energy range from 0-350 Kev and the other of which spans the high energy range from 0-3000 Kev. The three spectra are accumulated in the data accumulator 46 and are then transmitted by digital telemetry along the cable conductors, approximately each 0.25 ft. while logging, to the logging system located at the surface. At the earth surface, the data are demodulated by a demodulator 50 prior to recording in a magnetic tape recorder 52. Simultaneously these data are displayed in a spectral display device 54. The high energy and low energy formation gamma ray spectra are also transferred to the computer 56 in which the high energy spectrum is separated into high and how energy windows or regions dependent on the particular tracer used. The high energy window is selected to encompass specific gamma ray energy peaks characteristic of the particular tracer being used between 300 Kev and 3 Mev. The low energy window is selected not to encompass specific energy peaks of the radioactive tracer used in the perforating operation, but rather to include only downscattered radiation, generally between 150-700 Kev. The term window, as used herein, means an energy region or regions of the gamma ray energy spectrum. In actuality, several windows may be designated for use with a variety of tracers, and during or after the logging operation, the ones relevant to the particular tracer used could be selected for further processing.

Table I contains high and low energy windows for Scandium-46, Ir-192, and Au-198.

TABLE I

| Tracer Isotope | High Energy Window (Kev) | Low Energy Window (Kev) |
|---|---|---|
| $^{46}Sc$ | 825 -1250 | 175 - 700 |
| $^{192}Ir$ | 275 - 700 | 175 - 275 |
| $^{198}Au$ | 325 - 500 | 175 - 325 |

$$\text{NOTE: } R \equiv \frac{\text{High Energy Window}}{\text{Low Energy Window}} = \frac{C_A}{C_B}$$

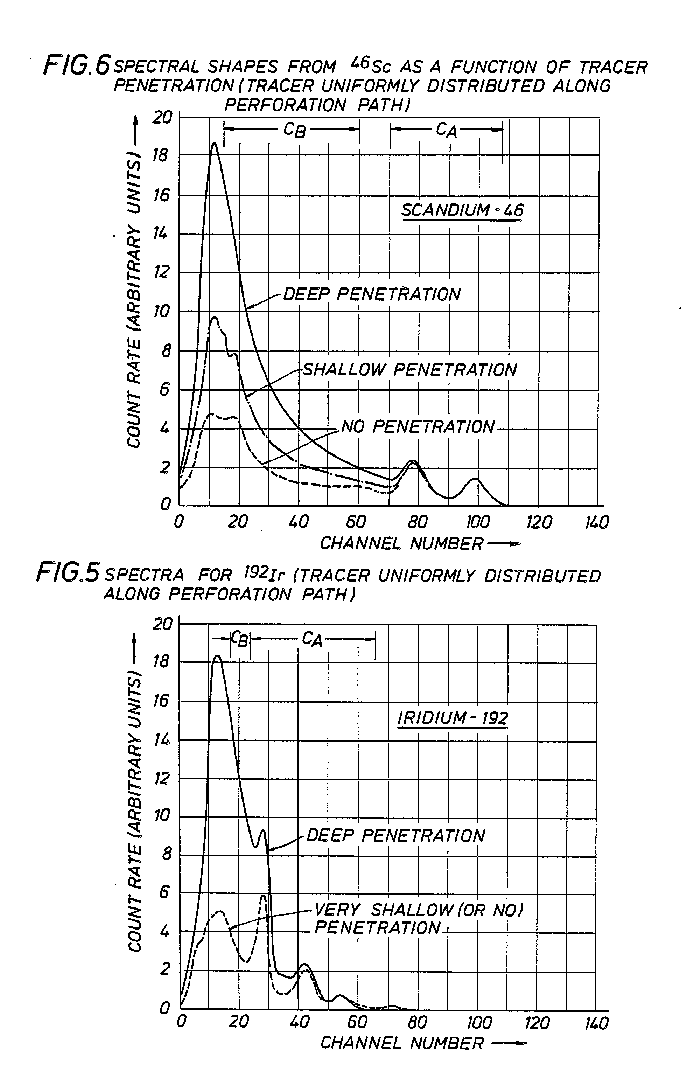

Fig. 5 is a graphical representation of gamma ray energy spectra for Iridium-192 as obtained in a well bore at the location of a perforation, and illustrating the differences in spectra for deep and very shallow (or no) penetrations. In both instances, the tracer was uniformly distributed along the path of the perforation.

Fig. 6 is a graphical illustration, similar to Fig. 5, and showing gamma ray energy spectra for Scandium-46 obtained in a well bore at the location of different perforations, and illustrating differences in spectra for different penetration depths. For all perforations, the tracer was uniformly distributed along the path of the perforation.

In the processing of data for measuring the gamma ray spectral degradation of the tracer, it is advisable to take into account the natural formation radioactivity from naturally occurring uranium, thorium, and potassium isotopes and their daughter products by removing the natural gamma ray radiation data from that count rate data obtained after perforation and which data measures the gamma ray energy spectra from the tracer as well as from the naturally occurring background gamma ray radiation.

It is also to be noted that it may not be necessary to subtract the natural formation radioactivity from the observed post-perforating spectral measurements prior to processing if enough radioactive tracer material is used in the method of the invention, or if the tracer could be spectrally deconvolved from the natural radioactivity possibly using a weighted least squares technique similar to the one described in U.S. patent 4,585,939. It is more likely, however, that a pre-perforating log run would be made to provide a measurement of natural gamma ray radioactivity background. Another log would then be run after perforating. The difference or count ratio spectra would then be processed to provide the radioactive tracer gamma ray spectral degradation signals representing the ratio described above.

As to the type of radioactive tracer employed, there is a lot of room for flexibility depending on applications and storage requirements. In general the only hard requirement for the radioactive source is that there be enough high energy gamma radiation present that significant changes in the lower energy Compton scattered range can be separately detected - and yet stay out of the very low energy photoelectrically sensitive energy range (≤ 150 Kev).

Thorium, potassium, cesium-137, cobalt-60, etc. could be used if very long half life sources are desirable. This might be the case if the charges had to be prepared a long time before usage in a well. A

6

disadvantage of this type of tracer activity, however, is that any residual perforation radioactivity will remain for a very long time in the formation. This would effect subsequent gamma ray logs run over the perforated interval. If Cs-137 or Co-60 were used, however, it could still be possible to spectrally isolate the natural formation gamma activity from the residual tracer activity.

In many applications, shorter half-life $(t_\frac{1}{2})$ tracers such as Zinc-65$(t_\frac{1}{2}=244d)$, Scandium-$^{46}(t_\frac{1}{2}=83d)$, Iridium-192$(+\frac{1}{2}=74d)$, or Iron$^{59}(t_\frac{1}{2}=45d)$ might be used. These would provide acceptable radiation levels for several weeks or months after shaped charge preparation, but would not affect logs run in workover operations years later. Other application might use very short half-life activity tracers such as Gold-198-$(t_\frac{1}{2}=2.7d)$ or Lanthanum-$^{140}(t_\frac{1}{2}=40h)$ which could possibly be placed on the shaped charge in the shop or at the wellsite just prior to using. These would have the advantage that logs would not be affected for very long after tracer use. Also, the radiation hazard to personnel could be minimized except when putting the tracer isotope into the shaped charge assembly.

It is to be understood that the foregoing description of the invention has been presented for purposes of illustration and is not intended to limit the invention to the precise structures and techniques disclosed herein. For example, changes may be made in the arrangement of the radioactive tracer and the explosive charge assembly so long as the result is a deposit of radioactive tracer in the perforation path at either the maximum depth of the perforation or in a uniform distribution along the length of the perforation path. Also, alternative methods may be used to indicate spectral degradation, such as a comparison of the overall observed spectral shapes relative to those determined for the same tracer in calibration experiments. It may also be possible to use more than one tracer: one designed to be deposited at the point of maximum perforation depth, and another to be deposited uniformly along the perforation. These spectral shapes could then be spectrally isolated and then downscatter calculations made on each to determine both Dmax and Dave simultaneously.

It is to be appreciated therefore that changes may be made by those skilled in the art without departing from the spirit of the invention.

## Claims

1. Shaped charge apparatus (10, 60) for producing a perforation in an earth formation, said apparatus comprising:
an explosive shaped charge container (14, 62) having a closed end (15), an open end, and a uniform symmetrical configuration about a central longitudinal axis (26);
an explosive charge (12, 61) in said container, said charge having a conically shaped recess (16) convergent inwardly from the surface thereof facing the open end of the container with the conical axis of the recess in coaxial alignment with the central axis of the explosive charge;
a conically shaped liner (17, 64) of relatively dense and ductile metallic material positioned in said recess in conforming engagement with the explosive charge; and
a gamma ray emitting radioactive substance (20, 65) positioned in the explosive shaped charge apparatus in contiguous relation with the conically shaped liner, whereby when the explosive charge is detonated, said apparatus produces a perforating jet comprising said radioactive substance which is adapted to be deposited at a specific locus in the path of the perforation made in the perforated formations.

2. Apparatus according to claim 1, wherein said radioactive substance is disposed substantially entirely at the apex of the conical shaped liner.

3. Apparatus according to claim 1, wherein said radioactive substance is a layer (65) of material which covers the external conical surface of said relatively dense and ductile material of the liner (64) and is disposed in conforming engagement with the explosive charge (61) substantially throughout the surface of the charge which defines the conical recess.

4. Shaped charge apparatus (10; 60) for use in a well bore for producing a perforation in adjacent earth formations, said apparatus comprising:
an explosive shaped charge container (14; 62) having a closed end (15), an open end, and a central longitudinal axis (26);
an explosive shaped charge container (14; 62) container, said shaped charge having a recess (16) extending inwardly from the surface thereof which faces the open end of the container and wherein the wall defining the recess is convergent to an apex and symmetrical about an axis;
a liner (17; 64) of relatively dense and ductile metallic material of a configuration corresponding to that of said recess and positioned in said recess in conforming engagement with the recess defining wall of the explosive charge; and

7

a gamma ray emitting radioactive substance (20; 65) positioned in the charge apparatus in contiguous relation with the liner, whereby when the charge is detonated, said apparatus produces a perforating jet comprising said radioactive substance which is adapted to be deposited at a specific locus in the path of the perforation made in the perforated formations.

5. A method of determining the penetration depth of a perforation made in an earth formation traversed by a well bore by a well perforating process wherein a perforating jet produced by detonation of an explosive charge assembly in the well bore is used to perforate the formation, comprising the steps of:

(1) depositing a radioactive tracer source of gamma rays within a perforation at a selected locus in the perforation path by means of an explosively derived perforating jet comprising the material of said radioactive tracer source;

(2) detecting the intensity of gamma radiation from the radioactive tracer source deposited in the perforation at a radioactivity detector counter positioned in the well bore at the corresponding depth of the perforation;

(3) separating the gamma ray intensity data into an observed energy spectrum of detected gamma rays;

(4) obtaining from said observed energy spectrum, count rate signals representative of gamma radiation in two or more different energy ranges, at least one of which is sensitive primarily to unscattered and minimally Compton scattered gamma rays, and at least one other of which includes significant lower energy gamma rays having undergone Compton scattering prior to detection, and

(5) combining said two or more count rate signals according to a predetermined relationship representative of the degradation of the energy spectrum of the radioactive tracer source to derive an output signal which is indicative of the radial distance the tracer source is deposited in the penetrated formation from the detector for indicating the depth of perforation penetration

6. A method according to claim 5, wherein the locus of the radioactive tracer source deposited in the formation is at the maximum depth of the perforation, whereby the signal representative of the degradation of the energy spectrum of the radioactive tracer source represented by said predetermined relationship is thereby an indication of the maximum depth of the perforation.

7. A method according to claim 5, wherein the radioactive tracer source is uniformly deposited in the formation throughout the length of the perforation path whereby the signal representative of the degradation of the energy spectrum of the radioactive source represented by said predetermined relationship is thereby an indication of the mean depth of the perforation penetration.

8. A method according to claim 5, 6 or 7, wherein said predetermined relationship includes a ratio of said count rate signal in said unscattered and minimally Compton scattered energy range to the count rate signal of gamma radiation in said lower energy range.

9. A method according to claim 5, 6, 7 or 8, wherein said separating steps include modification of the observed energy spectrum by removing therefrom the background gamma radiation energy spectrum due to naturally occurring gamma rays in the formation from uranium, thorium, and potassium isotopes and their daughter products to obtain a modified spectrum representing the energy spectrum of the radioactive tracer element alone.

10. A method according to claim 5, 6, 7, 8 or 9, wherein said naturally occurring gamma ray spectrum is obtained prior to the injection of radioactive tracer in the perforation.

FIG.1

FIG.2

FIG.3A

FIG.3B

FIG.7

FIG. 4

FIG.6 SPECTRAL SHAPES FROM $^{46}$Sc AS A FUNCTION OF TRACER PENETRATION (TRACER UNIFORMLY DISTRIBUTED ALONG PERFORATION PATH)

FIG.5 SPECTRA FOR $^{192}$Ir (TRACER UNIFORMLY DISTRIBUTED ALONG PERFORATION PATH)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 857 843 (FRIEND)<br>* Column 3, lines 51-60; column 4, line 70 - column 5, line 3 * | 1,4 | E 21 B 43/117<br>E 21 B 43/119<br>E 21 B 47/10<br>G 01 V 5/08 |
| A | . | 5 | |
| A,D | US-A-3 048 101 (LEBOURG)<br>* Column 3, lines 18-24 * | 1,4,5 | |
| A | US-A-2 770 736 (KRASNOW)<br>* Column 2, lines 11-14 * | 1,4,5 | |
| A | GB-A-2 024 409 (TEXACO DEVELOPMENT CORP.)<br>* Page 3, lines 50-57 * | 1,4,5 | |
| A | US-A-4 032 780 (PAAP)<br>* Abstract * | 1,4,5 | |
| A | US-A-4 504 736 (SMITH)<br>* Whole document * | 1,4,5 | |
| A,D | US-A-4 585 939 (ARNOLD)<br>* Claim 1 * | 1,4,5 | **TECHNICAL FIELDS SEARCHED (Int. Cl.4)**<br><br>E 21 B<br>G 01 V |
| A | SOCIETY OF PETROLEUM ENGINEERS OF AIME SPE, 58th ANNUAL TECHNICAL CONFERENCE, 5th-8th October 1983, pages 1-15, San Francisco, California, US; H.D. SMITH, Jr. et al.: "A multi-function compensated spectral natural gamma ray logging system"<br>* Whole document * | 1,4,5 | |

-/-

The present search report has been drawn up for all claims

| Place of search | Date of completion of the search | Examiner |
|---|---|---|
| THE HAGUE | 28-03-1989 | SOGNO M.G. |

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | SPWLA 27th ANNUAL LOGGING SYMPOSIUM, 9th-13th June 1986, pages 1-15, Houston, Texas, US; L.L. GADEKEN et al.: "Tracerscan - a spectroscopy technique for determining the distribution of multiple radioactive tracers in downhole operations" * Whole document * | 1,4,5 | |
| A | US-A-4 415 805 (FERTL) * Abstract * | 1,4,5 | |
| A | US-A-3 739 171 (SCOTT) * Whole document * | 1,4,5 | |

TECHNICAL FIELDS
SEARCHED (Int. Cl.4)

The present search report has been drawn up for all claims

| Place of search | Date of completion of the search | Examiner |
|---|---|---|
| THE HAGUE | 28-03-1989 | SOGNO M.G. |

EPO FORM 1503 03.82 (P0401)